# FASCICULE DE BREVET EUROPEEN

(11) **EP 0 543 731 B1**
(45) Date de publication et mention de la délivrance du brevet: **22.05.1996**
(21) Numéro de dépôt: 92403108.1
(22) Date de dépôt: 19.11.1992
(51) Int. Cl.: F16H 57/02, B62J 13/04

(54) **Boîte-pont de transmission**
Gehäuse-Brücke für Getriebe
Gear drive housing

(30) Priorité: 22.11.1991 FR 9114393
(43) Date de publication de la demande: 26.05.1993
(73) Titulaire: PUBERT, société anonyme, F-85110 Chantonnay (FR)
(72) Inventeur: Pubert, Henri, F-85110 Chantonnay (FR)
(74) Mandataire: Dawidowicz, Armand

(56) Documents cités:
- FR-A- 2 518 205
- GB-A- 396 505
- GB-A- 723 577
- GB-A- 740 690

## Description

La présente invention concerne les boîtes-ponts de transmission utilisées sur des matériels motorisés et plus particulièrement sur des engins de motoculture de plaisance.

L'invention vise les boîtes-ponts du type comportant un carter en tôle emboutie ou en un autre matériau comprenant un arbre primaire à la partie supérieure et un arbre ou deux demi-arbres à la partie inférieure. Une partie du carter renferme avantageusement une boîte de vitesse menée par l'arbre primaire ; la liaison entre la boîte de vitesse et l'arbre de sortie se fait au moyen d'une transmission par chaîne(s) ou cascade de pignons.

Ces boîtes-ponts de transmission, qui sont largement répandues, peuvent présenter des carters de deux types.

Le carter peut dans un premier cas être constitué d'une seule enceinte formée d'une seule pièce dès l'origine. Le carter décrit dans FR-A-2.533.653 appartient à cette famille de carters. En effet, les parois de ce dernier sont formées d'une seule pièce, ledit carter s'ouvrant par le haut et les éléments sont disposés à l'intérieur dans un ordre prédéterminé. Cependant ce type de carter est aujourd'hui abandonné car le démontage et la réparation sont très difficiles et trop longs.

Selon une autre configuration aujourd'hui classique, le carter est constitué de deux demi-carters généralement en tôle emboutie qui sont assemblés après avoir été équipés du mécanisme de changement de vitesse. Le plan de joint des demi-carters est variable en fonction du mode d'assemblage choisi. Ainsi, FR-A-2.490.861 décrit des demi-carters qui possèdent sur leur pourtour des lèvres d'emboîtement adaptées pour permettre leur emboîtement en force. FR-A-2.518.205 au nom du demandeur décrit quant à lui des demi-carters qui sont boulonnés l'un sur l'autre grâce à des jupes périphériques qui les entourent et qui viennent s'appliquer l'une sur l'autre dans le plan médian du carter. Dans le premier brevet cité ci-dessus , l'inconvénient majeur réside dans le non-démontage de l'ensemble. Dans le deuxième brevet susmentionné, il est nécessaire de prévoir une phase d'usinage en vue de réaliser les perçages et les alésages d'où un coût de fabrication plus important en raison du nombre élevé de boulons mais surtout un temps de montage/démontage important. De plus, on note dans ce type de configuration un freinage à l'avancement car la partie inférieure du carter pourvue de boulons dépassant est souvent au contact de la terre qui s'accumule en cet emplacement.

On connait par ailleurs des carters de chaînes de bicyclette qui n'ont pas de fonction porteuse. Dans le cas d'un tel carter décrit dans GB-A-396.505, deux flasques présentent des rebords périphériques qui viennent s'appliquer l'un contre l'autre. L'ensemble est maintenu par une bande d'étanchéité à section en forme de U comprimée par une bande de serrage fermée par une vis coopérative avec deux languettes aux extrémités de la bande de serrage. Ce système connu, s'il suffit pour un carter d'isolation ne subissant pas de contraintes mécaniques, ne permet pas la construction d'une boîte-pont du type décrit à l'introduction dans laquelle, par définition, au moins une partie de la transmission est portée par le carter. En outre, le démontage pour réparation et le remontage de ce carter connu sont compliqués du fait du démontage du joint d'étanchéité qui a été comprimé pendant l'utilisation précédente et du montage d'une bande d'étanchéité neuve.

Le but de la présente invention est donc de pallier les inconvénients mentionnés ci-dessus et de proposer une boîte de transmission dont le carter est assemblé de telle sorte que, tout en étant parfaitement étanche, il soit rapidement monté et/ou démonté et présente un bon coefficient de pénétration dans la terre.

L'invention concerne à cet effet une boîte-pont de transmission mécanique à rapports de préférence multiples, pour matériels motorisés en particulier les petits engins pour le travail des sols tels que les motoculteurs, comprenant des moyens de transmission tels que des pignons et au moins une chaîne, lesdits moyens de transmission étant enfermés à l'intérieur d'un carter portant au moins une partie desdits moyens de transmission et constitué de deux flasques munis de rebords périphériques qui viennent s'appliquer l'un sur l'autre dans le plan médian du carter, caractérisée en ce que lesdits rebords sont assemblés par un jonc périphérique à profil interne en forme générale de U dont les faces convergentes coiffent lesdits rebords, ledit jonc étant muni d'au moins un moyen de diminution de sa longueur.

D'autres caractéristiques et avantages de l'invention apparaîtront encore à la lecture de la description qui suit et des dessins joints, lesquels description et dessins étant donnés surtout à titre d'exemples. Dans ces dessins :
La figure 1 représente une vue en perspective du carter équipé du jonc suivant une ligne de coupe perpendiculaire aux parois du carter;
la figure 2 représente le jonc de la figure 1 équipé d'un moyen de diminution de sa longueur;
la figure 3 représente une vue de face d'un flasque constituant l'un des éléments du carter; et
la figure 4 est une vue schématique en perspective d'une entretoise.

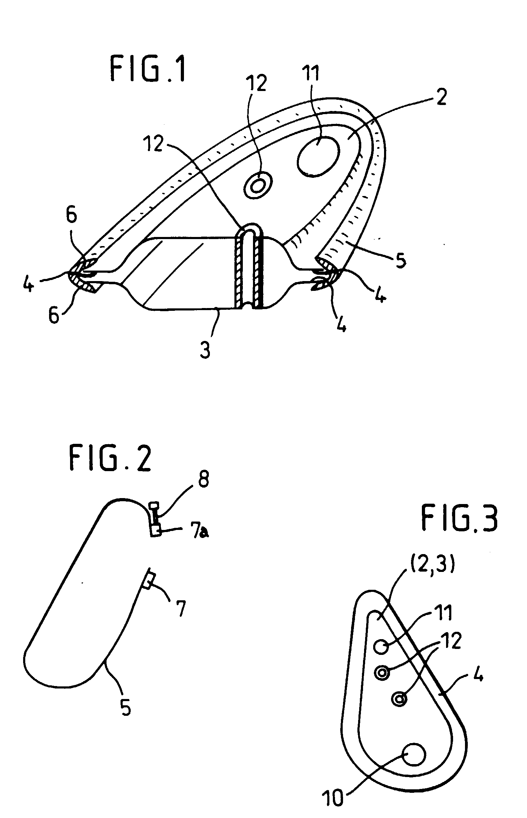

Conformément à la figure 1, la boîte-pont de transmission comporte un carter constitué de deux flasques 2 et 3 renfermant une chaîne cinématique à base de pignons et/ou de chaînes. Ces deux flasques 2 et 3 présentent des lèvres ou rebords périphériques 4 qui permettent ainsi la liaison par contact des deux demi-carters entre eux. Ces flasques 2 et 3 sont maintenus reliés l'un à l'autre au moyen d'un jonc 5 à profil interne en forme générale de U à faces 6 convergentes en direction du fond du profilé de manière à assurer une liaison à contact étanche des flasques 2 et 3. Ce jonc 5 est équipé lors du serrage d'au moins un moyen de diminution de longueur qui peut être constitué, conformément à la figure 2, d'un dispositif de serrage par exemple du type vis-écrou. Un écrou 7 est fixe, la vis 8 vient par l'intermédiaire d'une chape 7a se visser à l'intérieur de l'écrou. On peut également imaginer, selon une autre forme de réalisation de l'invention, que le moyen de diminution de la longueur du jonc soit une genouillère. Ce jonc 5 est en un matériau quelconque et peut notamment être en un matériau thermorétractable pour obtenir la diminution de longueur du jonc. Les flasques 2 et 3 du carter sont quant à eux en tôle d'acier emboutie, en aluminium coulé, en plastique ou en toute autre matière. Les faces extérieures du jonc 5 occupent une faible épaisseur de manière à permettre une meilleure pénétration dans le sol de la partie basse du carter. Grâce à cette conformation, on note une amélioration importante de la vitesse d'avancement de l'engin équipé de ce type de transmission.

Le profil particulier du jonc 5 assure, au cours de la diminution de longueur, un rapprochement des lèvres 4 des flasques 2 et 3, ce qui assure l'étanchéité requise et permet en outre de diminuer la largeur de ces lèvres 4 par rapport à l'état de la technique, ce qui entraîne une économie de matière.

La figure 3 fournit un exemple d'un porte-palier de flasques de carter comportant des orifices 10,11 pour recevoir l'arbre ou les demi-arbres de sortie (non représentés). La liaison entre les arbres est réalisée au moyen d'une chaîne cinématique à base de pignons et/ou de chaînes non-représentée mais pouvant par exemple être conforme à celle décrite dans le FR-A-2.518.205.

De préférence, les flasques 2, 3 sont maintenus l'un par rapport à l'autre par des entretoises épaulées 12, par exemple sous forme de piliers creux ou pleins. Ces entretoises peuvent en outre servir de points d'ancrage pour des boulons ou des goujons pour la fixation du carter, en particulier sur le châssis, ce qui rend l'ensemble facilement et rapidement démontable pour réparation éventuelle.

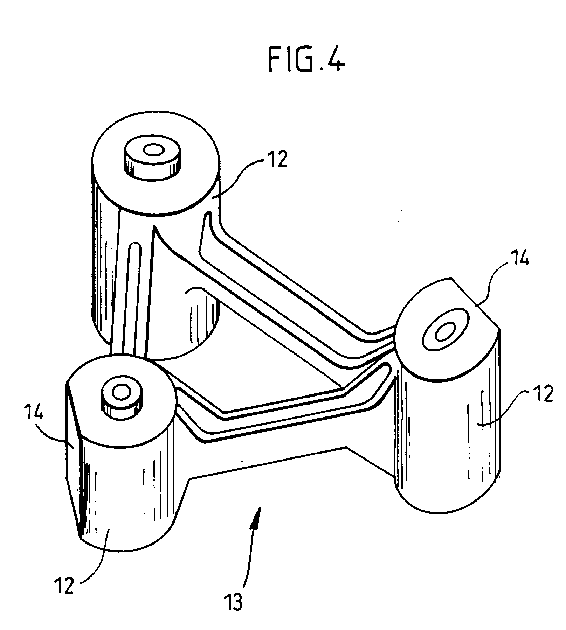

Selon un mode de réalisation préféré de l'invention, représenté à titre d'exemple à la figure 4, une pièce unique 13 comprend au moins deux entretoises épaulées 12 (trois dans l'exemple représenté). Outre leur fonction de rigidification de l'ensemble et d'ancrage, les entretoises 12 assurent une fonction de calibre garantissant la régularité du positionnement des axes et évitant les déplacements relatifs des flasques 2, 3 lors du serrage du jonc 5. La forme de réalisation de la pièce 13 avec trois entretoises 12 disposées selon un triangle non symétrique assure une solution optimale aussi bien du point de vue de la résistance mécanique que du positionnement avec un entraxe précis des paliers porteurs de la transmission.

Pour la fixation de la boîte-pont sur un châssis, les entretoises 12 sous forme de la pièce 13 absorbent le serrage des boulons ou des goujons de fixation sans transmettre ce serrage aux flasques 2, 3.

La pièce 13 peut en outre comporter un méplat 14 évitant le battement d'une chaîne.

La pièce 13 est avantageusement moulée en matière plastique.

L'invention ne se limite pas aux exemples de réalisation représentés mais englobe au contraire un certain nombre de variantes conformes aux caractéristiques de l'invention.

## Revendications

1. Boîte-pont de transmission mécanique, à rapports de préférence multiples, pour matériels motorisés en particulier les petits engins pour le travail des sols tels que les motoculteurs, boîte-pont comprenant des moyens de transmission tels que des pignons et/ou au moins une chaîne pour conduire le mouvement à au moins un arbre de sortie, lesdits moyens de transmission étant enfermés à l'intérieur d'un carter portant au moins une partie desdits moyens de transmission et constitué de deux flasques (2,3) munis de rebords périphériques (4) qui viennent s'appliquer l'un sur l'autre,
caractérisée en ce que lesdits rebords (4) sont assemblés par un jonc (5) périphérique à profil interne en forme générale de U dont les faces (6) convergentes coiffent lesdits rebords (4), ledit jonc (5) étant muni d'au moins un moyen de diminution de sa longueur (7,8).

2. Boîte-pont selon la revendication 1,
caractérisée en ce que les moyens de diminution de la longueur du jonc (7,8) sont des moyens de serrage permettant de rapprocher les extrémités du jonc.

3. Boîte-pont de transmission selon la revendication 2,
caractérisée en ce que ledit moyen de serrage est un dispositif vis (8)/écrou (7).

4. Boîte-pont selon la revendication 1,
caractérisée en ce que les moyens de diminution de la longueur du jonc (7,8) sont constitués par une genouillère.

5. Boîte-pont selon la revendication 1,
caractérisée en ce que le jonc (5) est en un matériau thermorétractable.

6. Boîte-pont selon l'une des revendications 1 à 5,
caractérisée en ce que les faces extérieures du jonc (5) sont profilées de manière à diminuer le coefficient de pénétration dans le sol.

7. Boîte-pont selon l'une des revendications 1 à 6,
caractérisée en ce que les flasques (2, 3) sont maintenus l'un par rapport à l'autre par des entretoises épaulées (12).

8. Boîte-pont selon la revendication 7,
caractérisée en ce que lesdites entretoises épaulées (12) sont sous forme d'une pièce unique (13), de préférence moulée en matière plastique.

9. Boîte-pont selon la revendication 8,
caractérisée en ce que ladite pièce unique (13) comporte trois entretoises épaulées (12) réparties selon un triangle non symétrique.

## Claims

1. Mechanical transmission gear drive, preferably with a number of ratios, for motorised equipment, in particular small machines for working the ground, such as power cultivators, a gear drive comprising transmission means such as gear wheels and/or at least one chain for taking the movement to at least one output shaft, the said transmission means being enclosed within a casing carrying at least part of the said transmission means and consisting of two plates (2, 3) with peripheral flanges (4) which are applied against each other, characterised in that the said flanges (4) are connected by a peripheral retaining ring (5) with an internal profile in an overall U shape, the convergent faces (6) of which fit over the said flanges (4), the said retaining ring (5) being provided with at least one means of reducing its length (7, 8).

2. Gear drive according to Claim 1, characterised in that the means of reducing the length of the retaining ring (7, 8) are clamping means enabling the ends of the retaining ring to be brought closer together.

3. Transmission gear drive according to Claim 2, characterised in that the said clamping means is a screw (8) / nut (7) device.

4. Gear drive according to Claim 1, characterised in that the means of reducing the length of the retaining ring (7, 8) consist of a toggle.

5. Gear drive according to Claim 1, characterised in that the retaining ring (5) is made from a heat-shrinking material.

6. Gear drive according to one of Claims 1 to 5, characterised in that the external faces of the retaining ring (5) are profiled so as to reduce the coefficient of penetration into the ground.

7. Gear drive according to one of Claims 1 to 6, characterised in that the plates (2, 3) are held with respect to each other by shouldered braces (12).

8. Gear drive according to Claim 7, characterised in that the said shouldered braces (12) are in the form of a single piece (13), preferably moulded from plastic.

9. Gear drive according to Claim 8, characterised in that the said single piece (13) has three shouldered braces (12) distributed in a non-symmetrical triangle.

## Patentansprüche

1. Gehäusebrücke für ein vorzugsweise mehrere Übersetzungsverhältnisse aufweisendes mechanisches Getriebe für motorisierte Geräte, insbesondere kleine Maschinen für Erdarbeiten, beispielsweise Einachstraktoren, wobei die Gehäusebrücke Getriebemittel aufweist, beispielsweise Zahnräder und/oder wenigstens eine Kette, um die Bewegung zu wenigstens einer Abtriebswelle zu leiten, wobei die Getriebemittel im Inneren eines Gehäuses eingeschlossen sind, das wenigstens einen Teil der Getriebemittel trägt und durch zwei Seitenteile (2, 3) gebildet ist, die mit Umfangsflanschen (4) versehen sind, die aneinander zur Anlage kommen,
**dadurch gekennzeichnet**, daß die Flansche (4) durch einen Umfangsring (5) zusammengefügt sind, dessen innerer Querschnitt im wesentlichen von der Form eines U ist, dessen konvergierende Flächen (6) die Flansche (4) abdecken, wobei der Ring (5) mit wenigstens einem Mittel (7, 8) zur Verringerung seiner Länge versehen ist.

2. Gehäusebrücke nach Anspruch 1,
**dadurch gekennzeichnet**, daß die Mittel (7, 8) zur Verringerung der Länge des Ringes Spannmittel sind, die es ermöglichen, die Enden des Ringes aneinander anzunähern.

3. Gehäusebrücke nach Anspruch 2 für ein Getriebe,
**dadurch gekennzeichnet**, daß das Spannmittel eine Vorrichtung mit Schraube (8) und Mutter (7) ist.

4. Gehäusebrücke nach Anspruch 1,
**dadurch gekennzeichnet**, daß die Mittel (7, 8) zur Verringerung der Länge des Ringes durch einen Kniehebelmechanismus gebildet sind.

5. Gehäusebrücke nach Anspruch 1,
**dadurch gekennzeichnet**, daß der Ring (5) aus einem unter Temperatureinwirkung zusammenziehbaren Material besteht.

6. Gehäusebrücke nach einem der Ansprüche 1 bis 5,
**dadurch gekennzeichnet**, daß die äußeren Flächen des Ringes (5) derart profiliert sind, daß der Eindringkoeffizient in den Erdboden verringert ist.

7. Gehäusebrücke nach einem der Ansprüche 1 bis 6,
**dadurch gekennzeichnet**, daß die Seitenteile (2, 3) durch mit Schultern versehene Zwischenstücke (12) in bezug zueinander gehalten sind.

8. Gehäusebrücke nach Anspruch 7,
**dadurch gekennzeichnet**, daß die mit Schultern versehenen Zwischenstücke (12) durch ein einziges Teil (13) gebildet sind, das vorzugsweise aus Kunststoff geformt ist.

9. Gehäusebrücke nach Anspruch 8,
**dadurch gekennzeichnet**, daß das einzige Teil (13) drei mit Schultern versehene Zwischenstücke (12) aufweist, die entlang eines nicht symmetrischen Dreiecks verteilt sind.
